# EUROPEAN PATENT SPECIFICATION

(11) **EP 2 470 604 B1**
(45) Date of publication and mention of the grant of the patent: **13.11.2019**
(21) Application number: 10814124.3
(22) Date of filing: 27.07.2010
(51) Int. Cl.: C08L 53/02, C08K 9/04, C08K 3/04, B60C 1/00

(54) **USE OF SURFACE-TREATED CARBON BLACKS IN AN ELASTOMER TO REDUCE COMPOUND HYSTERESIS AND TIRE ROLLING RESISTANCE AND IMPROVE WET TRACTION**
VERWENDUNG OBERFLÄCHENBEHANDELTER RUSSE IN EINEM ELASTOMER FÜR REDUZIERTE VERBINDUNGSHYSTERESE, REDUZIERTEN REIFENROLLWIDERSTAND UND VERBESSERTE NASSTRAKTION
UTILISATION DE NOIRS DE CARBONE TRAITÉS EN SURFACE DANS UN ÉLASTOMÈRE AFIN DE RÉDUIRE L'HYSTÉRÉSIS DU COMPOSÉ ET LA RÉSISTANCE AU ROULEMENT D'UN PNEUMATIQUE ET D'AMÉLIORER LA TRACTION SUR VOIE HUMIDE

(30) Priority: 27.08.2009 US 237593 P
(43) Date of publication of application: 04.07.2012
(73) Proprietor: COLUMBIAN CHEMICALS COMPANY, Marietta, GA 30062 (US); ARLANXEO Deutschland GmbH, 41540 Dormagen (DE)
(72) Inventor: HERD, Charles, Woodstock, 30188, Georgia (US); EDWARDS, Charles, Roswell, 30075, Georgia (US); CURTIS, John, Kennesaw, 30152 Georgia (US); CROSSLEY, Steve, Marietta, 30062, Georgia (US); SCHOMBERG, K., Cory, Magnolia TX 77354-4411 (US); GROSS, Thomas, 42789 Wulfrath (DE); STEINHAUSER, Norbert, 40789 Monheim (DE); KLOPPENBERG, Heike, 40625 Düsseldorf (DE); HARDY, David, 41541 Dormagen (NL); LUCASSEN, Alex, 41540 Dormagen (DE)
(74) Representative: Leißler-Gerstl, Gabriele
(86) International application number: PCT/US2010/043384
(87) International publication number: WO 2011/028337

(56) References cited:
- EP-A1- 1 400 560
- DE-A1-102007 044 174
- US-A- 5 248 722
- US-A- 5 248 722
- US-A- 5 977 238
- US-A- 6 013 718
- US-A- 6 071 995
- US-A1- 2003 144 401
- US-A1- 2006 178 467
- US-B1- 6 503 311
- US-B2- 7 199 176

## Description

### BACKGROUND OF THE INVENTION

### 1. Field of the Invention

The present invention relates to a compound composition utilizing surface-treated carbon blacks. More particularly, the present invention relates to surface-treated carbon blacks used in conjunction with a functionalized elastomer, where the elastomer is functionalized along the polymer chain, giving a higher probability of increased carbon-black-elastomer interaction, providing substantial reductions in rubber vulcanizate hysteresis and is useful for the manufacture of rubber articles, including tires.

### 2. General Background of the Invention

The reduction of rolling resistance in tire tread compounds is important in raising the fuel economy of vehicles and reducing carbon dioxide emissions. One method of reducing the rolling resistance of tire tread compounds, normally composed of styrene butadiene copolymers and butadiene or natural rubber polymer blends and carbon black, is to alter the filler characteristics such that the filler-filler interaction is reduced and the filler-elastomer interaction is increased. This works because the highest source of heat generation in carbon-black-filled elastomeric compounds typically arises from the carbon black as a result of its propensity to form through-going networks via high filler-filler interaction. Reducing this filler-filler interaction and increasing the filler-elastomer interaction can substantially reduce the degree of filler networking and compound hysteresis, and thus the rolling resistance of the tire tread compound and ultimately the tire itself. Typically, reduced filler-filler interaction or networking is measured by a decrease in the low strain dynamic modulus, which results in a smaller change in the difference between the low strain and high strain dynamic elastic modulus. This phenomenon is called the Payne Effect.

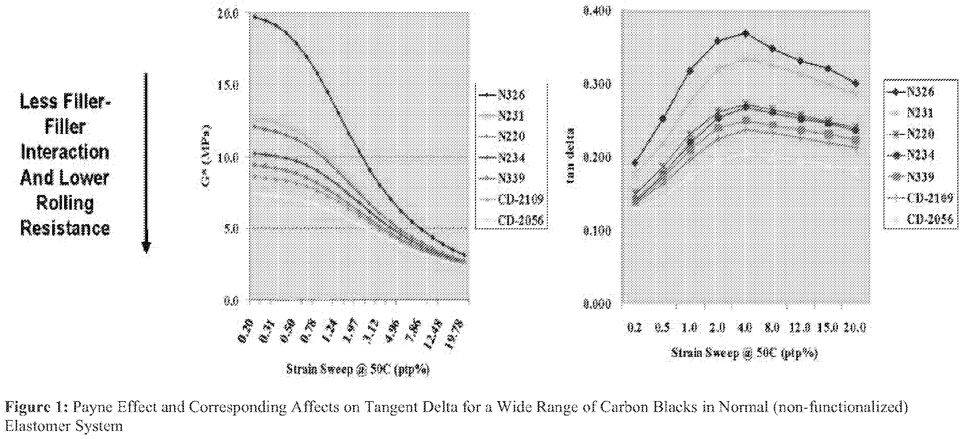

This Payne Effect is demonstrated in **Figure 1** for normal carbon black containing elastomeric compounds, where the compounds with the smaller change (flatter curve) in dynamic modulus as a function of strain, also demonstrate lower tangent delta as a function of strain, where tangent delta is the ratio of the dynamic loss modulus to the dynamic elastic modulus, and is a typical parameter used in dynamic testing as an indicator of heat buildup of elastomeric compounds, with lower tangent delta values representing compounds with lower heat buildup properties.

Methods that can be used to reduce filler-filler and increase filler-elastomer interaction in elastomeric compound compositions include:
- use of broad distribution carbon blacks to increase the average interaggregate spacing and thus reduce the degree of filler-filler networking, *(e.g. see* US Patent 7,238,741*)*
- use of coupling agents with carbon black to increase the carbon-black-elastomer interaction, where coupling agents work by directly bonding with both the filler and elastomer; *(e.g. see* US Patent 5,494,955*)*
- use of coupling agents with silica to facilitate silica dispersion and decrease filler-filler interaction *(e.g. see* US Patent 5,227,425*)*
- use of functionalized elastomers with compatible functionalized fillers, as has been done with SBR elastomers functionalized at the chain ends, in combination with an oxidized carbon black. *(e.g. see* US Patents 5,248,722 *and* 2006/0178467*)* Several disadvantages of the above approaches are evident.

First the magnitude of the change in vulcanizate hysteresis with the use of broad distribution carbon blacks has been minimal and on the order of 3 to 10%, based upon tangent delta measurements at 60 to 75 ° C.

Secondly, the use of coupling agents for carbon black and silica in compound compositions adds additional cost, requires additional mixing steps and special VOC emission handling systems for ethanol emissions that result from activation of the coupling agent used for increasing the filler-elastomer interaction via reactive mixing.

Thirdly, when carbon blacks are used in conjunction with coupling agents, relatively small benefits are also obtained in terms of compound hysteresis reduction.

Lastly, when silica is used with a coupling agent, which does provide significant reduction in vulcanizate hysteresis on the order of 40% or more, penalties are not only again incurred in terms of the cost of the silica and coupling agent, but the silica itself is very abrasive and causes an increase in the wear rate of the rubber mixers used in industrial factories. Silica also requires longer mixing and dispersion times, resulting in higher energy use and cost and lower factory output.

Thus, the object of this invention is to provide a novel rubber compound composition based on surface-treated carbon blacks and a functionalized polymer, that does not require the use of expensive coupling agents, and does not result in premature wear of factory rubber mixers, but yet provides significant reductions in compound hysteresis and maintains or improves compound wet traction more similar to silica, provides good abrasion resistance and provides easy dispersion for shorter mixing cycles, lower energy costs and higher factory throughput versus silica-based compound compositions. Additionally, this unique performance benefit is obtained with the combination of surface-treated carbon blacks and a functionalized solution-SBR, which has its functionalization along the polymer chain that provides a much higher probability of increasing the filler-elastomer interaction as opposed to elastomers with terminal, chain-end functionalization. Prior art, especially for solution SBR, teaches the use of polymer functionalization at the chain ends.

### BRIEF SUMMARY OF THE INVENTION

Scientists employed by Columbian Chemicals Company and Lanxess jointly developed the invention disclosed herein. In summarizing the invention, surface-treated carbon blacks have been used in conjunction with a functionalized elastomer, where the elastomer is functionalized along the chain, giving a higher probability of increased carbon-black-elastomer interaction, providing surprising and substantial reductions in hysteresis and benefits in wet traction relative to conventional carbon-black containing compounds, with said reductions in compound hysteresis and increases in wet traction more closely approaching silica-containing compounds, while also maintaining the excellent abrasion resistance of a carbon black compound.

### BRIEF DESCRIPTION OF THE DRAWINGS

For a further understanding of the nature, objects, and advantages of the present invention, reference should be had to the following detailed description, read in conjunction with the following drawings, wherein like reference numerals denote like elements and wherein:
**Figure 1** illustrates Payne Effect and Corresponding Affects on Tangent Delta for a Wide Range of Carbon Blacks in a Normal (non-functionalized) Elastomer System;
**Figure 2** illustrates Payne Effect Reduction for Peroxide and Ozone Treated (for Varying Times) N234 in functionalized (along the chain) BUNA VSL VP PBR-4003 vs a non-treated N234 Control and Silica in Normal BUNA VSL 5025-2 (compounds with 0.2 phr DPG);
**Figure 3** illustrates Payne Effect Reduction for Peroxide, Ozone and Amine Treated N234 in functionalized (along the chain) BUNA VSL VP PBR-4003 vs a non-treated N234 Control and Silica in Normal BUNA VSL 5025-2 (compounds with 0.2 phr DPG);
**Figure 4** illustrates Tangent Delta as a Function of Dynamic Strain for Peroxide and Ozone Treated (for Varying Times) N234 in functionalized (along the chain) BUNA VSL VP PBR-4003 vs a non-treated N234 Control and Silica in Normal BUNA VSL 5025-2 (compounds with 0.2 phr DPG);
**Figure 5** illustrates Tangent Delta as a Function of Dynamic Strain for Peroxide, Ozone and Amine Treated N234 in functionalized (along the chain) BUNA VSL VP PBR-4003 vs a non-treated N234 Control and Silica in Normal BUNA VSL 5025-2 (compounds with 0.2 phr DPG);
**Figure 6** illustrates Tangent Delta as a Function of Temperature for Peroxide and Ozone Treated (for Varying Times) N234 in functionalized (along the chain) BUNA VSL VP PBR-4003 vs a non-treated N234 Control and Silica in Normal BUNA VSL 5025-2 (compounds with 0.2 phr DPG);
**Figure 7** illustrates Tangent Delta as a Function of Temperature for Peroxide, Ozone and Amine Treated N234 in functionalized (along the chain) BUNA VSL VP PBR-4003 vs a non-treated N234 Control and Silica in Normal BUNA VSL 5025-2 (compounds with 0.2 phr DPG);
**Figure 8** illustrates Payne Effect Reduction for Ozone Treated (5.5 hrs) N234 and Higher Surface Area Carbon Blacks (N115, N134, CD2115) in functionalized (along the chain) BUNA VSL VP PBR-4003 vs a non-treated N234 Control and Silica in Normal BUNA VSL 5025-2 (compounds with 2.0 phr DPG);
**Figure 9** illustrates Tangent Delta Reduction for Ozone Treated (5,5 hrs) N234 and Higher Surface Area Carbon Blacks (N115, N134, CD2115) in functionalized (along the chain) BUNA VSL VP PBR-4003 vs anon-treated N234 Control and Silica in Normal BUNA VSL 5025-2 (compounds with 2.0 phr DPG);
**Figure 10** illustrates Tangent Delta as a Function of Temperature for Ozone Treated N234 and Higher Surface Area Carbon Blacks in functionalized (along the chain) BUNA VSL VP PBR-4003 vs a non-treated N234 Control and Silica in Normal BUNA VSL 5025-2 (compounds with 2.0 phr DPG); and
**Figure 11** illustrates the changes in tangent delta at 0°C and 60°C predicting wet traction and rolling resistance for Inventive Compound 8, BUNA VSL VP PBR 4003/BR with N234 oxidized, to be equal to better than the Silica Reference Compound 10, shown in **Tables 11-13.**

### DETAILED DESCRIPTION OF THE INVENTION

In a preferred embodiment of the present invention, the results of this work in a model tire tread compound have shown significant reduction of tangent delta (main parameter used to evaluate potential of a rubber compound to reduce heat build-up in a dynamic application). In fact, these results have been unexpected in terms of the magnitude of the decrease in tangent delta and the corresponding improvement in predicted wet traction (tangent delta in the range of 0 to -10°C). This type of behavior, lower tangent delta at 60°C to 75°C (lower rolling resistance prediction) and a higher tangent delta at 0°C (higher wet traction prediction), was surprising for carbon black.

Normally, compound hysteresis reduction is relatively small for carbon black, either used as manufactured or even surface treated, when combined with common and normal SBR, BR, NR or EPDM compounds, and normally one or the other parameters (rolling resistance or wet reaction) might be improved, but not both simultaneously, and not to a significant degree. In the present invention, the combination of the surface-treated carbon black and the functionalized elastomer, with functionalization along the polymer chain, provides a compound composition with significant tangent delta reduction and maintains and improves the potential wet traction response.

What is provided is a compound composition as defined in the claims comprised of a surface-treated carbon black, treated via oxidation, oxidation followed by treatment with a base, or chlorination followed by treatment with a base, which provides a carbon black with surface functional groups composed of oxygen, basic or a combination of oxygen and basic functional groups, and a functionalized polymer with functionalization along the polymer chain, with the polymer representing a solution SBR, and the functionalization representing a carboxylic acid (-COOH) functionality.

Additionally, there is provided a compound that is reactively mixed to facilitate chemical interaction between the functionalized carbon black and the functionalized elastomer, where reactive mixing is accomplished in a rubber mixer such that the compound is held at an elevated temperature in the range of 145°C to 160°C for a time period of 2 to 8 minutes.

The present invention utilizes a typical tire tread compound composition as represented in **Table 1**, where the compound is composed entirely of the Lanxess functionalized solution SBR, BUNA VSL VP PBR 4003 (hereafter referred to as PBR 4003), but might also be represented by SBR/BR blends of ratios of 60/40 SBR/BR to 100/0 SBR/BR, as shown in **Table 2**. Additionally, surface-treated N234 carbon black and/or mixtures of surface-treated and as-manufactured carbon black or silica in ratios ranging from 50/50 to 100/0 can be used, in amounts ranging from 40 to 120 phr, along with typical processing oils, ranging from 2 to 50 phr, being representative of a typical tire tread formulation as might be used for tires.

The present invention also utilizes a typical mixing scheme as represented in **Table 3**, where the order of ingredient addition shown is typical of rubber mixing schemes, but, in addition, normal mixing times and temperatures are used and compared to reactive mixing times and temperatures, which are longer and higher temperature, respectively versus normal mixing schemes. The reactive mixing schemes are required to facilitate the increased carbon black-elastomer interaction of the surface-treated carbon blacks and functionalized polymer with functionalization along the polymer chain to realize the compound advantages of low hysteresis and good wet traction and abrasion resistance as described above.

The invention provides compound compositions as defined in the claims prepared with several different carbon black surface treatment schemes with different chemistries, to synergistically interact with the functionalized polymer with functionalization along the polymer chain, and in this case with carboxylic acid functionalization along the polymer chain, to increase filler-elastomer interaction and decrease the filler-filler interaction, as evidenced by reduction of the low strain elastic modulus, per the Payne Effect, and significantly reduce compound hysteresis and maintain and improve compound wet traction and abrasion resistance.

Besides compound compositions including N234, carbon blacks as defined and listed in **Table 4** include carbon blacks with nitrogen surface areas in the range of 60 to 300 m²/g (NSA, see ASTM D6556), and structure levels or oil adsorption (OAN, see ASTM D2414) levels in the range of 50 to 180 cc/100g, as might be produced via the furnace, impingement on lampblack process.

There is provided a compound composition of functionalized polymer with functionalization along the polymer chain and a carbon black surface treatment with oxidation of the carbon black surface via peroxide *(e.g. see* US Patent 6,120,594*)* or ozone *(e.g. see* US Patent 6,471,933*)* to provide a polar-polar and/or intermolecular-hydrogen-bonding mechanism between the oxygen-based functional groups on the carbon black surface and the carboxylic acid functionality along the polymer chain of the functionalized polymer, with the functionalization along the polymer chain resulting in increased filler-elastomer interaction, reduced filler-filler interaction and reduced Payne Effect.

There is provided a compound composition of functionalized polymer with functionalization along the polymer chain and a carbon black surface treatment with oxidation of the carbon black followed by treatment with amine-based compounds (e.g. see US Patent 5,708,055), preferably diamine compounds, that provide an acid-base interaction with the basic amine functional groups on the carbon black and the carboxylic acid groups along the polymer chain of the functionalized polymer, with the functionalization along the polymer chain resulting in increased filler-elastomer interaction, reduced filler-filler interaction and reduced Payne Effect.

There is provided a compound composition of functionalized polymer with functionalization along the polymer chain and a carbon black surface treatment with oxidation of the carbon black followed by treatment with amine-based compounds, preferably amine compounds with hydroxide or other polar, oxygen containing functional groups, that provides an acid-base interaction and/or acid-base and polar-polar interaction with the functional groups on the carbon black and the carboxylic groups along the polymer chain of the functionalized polymer, with the functionalization along the polymer chain resulting in increased filler-elastomer interaction, reduced filler-filler interaction and reduced Payne Effect.

There is provided a compound composition of functionalized polymer with functionalization along the polymer chain and a carbon black surface treatment with oxidation of the carbon black followed by treatment with hydroxy-based compounds, that provides a polar-polar interaction and/or intermolecular-hydrogen-bonding with the functional groups on the carbon black and the carboxylic groups along the polymer chain of the functionalized polymer, with the functionalization along the polymer chain resulting in increased filler-elastomer interaction, reduced filler-filler interaction and reduced Payne Effect.

There is provided a compound composition of functionalized polymer with functionalization along the polymer chain and a carbon black surface treatment with chlorination of the carbon black followed by treatment with ammonia, that provides an acid-base interaction between the functional groups on the carbon black and the carboxylic groups along the polymer chain of the functionalized polymer, with functionalization along the polymer chain resulting in increased filler-elastomer interaction, reduced filler-filler interaction and reduced Payne Effect.

A compound composition comprised of a surface-treated carbon black and a functionalized polymer with carboxylic-acid functionalization along the polymer chain, with the polymer representing a solution SBR, to reduce compound hysteresis and rolling resistance and improve wet traction in tires, while maintaining good abrasion resistance including passenger, truck and racing tires.

The present invention further provides the use of the inventive compound composition for the production of vulcanizates, which in turn serve for the production of highly reinforced mouldings, in particular for the production of tires.

The present invention further provides the use of the inventive compound composition for the production of rubber mixtures.

### EXPERIMENTAL: POLYMERS AND CARBON BLACK PREPARATION

The polymers and as manufactured and surface-treated carbon blacks used in this present compound composition invention are listed in **Table 5** and analytical results showing the affects of surface treatment are shown in **Table 6**.

Ozonated samples of carbon black included Sturdivant-milled beaded-carbon-black treated in a rotating drum for various lengths of time, ranging from 1.5 to 5.5 hours, with an air flow containing approximately 2% ozone concentration followed by wet beading and then drying the samples in an oven at 125°C for six hours.

Hydrogen peroxide samples included powder carbon black wet beaded with a 50/50 weight percent of 35% to 50% hydrogen peroxide in a pin beader following Columbian Internal Batch Lab Procedure LS0-1. The resulting wet beads were then dried in a fluid bed drier at 125°C for two hours.

Amine samples of carbon black were prepared by treating fifty grams of ozonated N234 powder added to 2.5 liters of water and 25 ml of acetone in a 6 liter Lab Max reaction vessel. Ethylene diamine, diluted to a 1 % solution in distilled water, was slowly added to the Lab Max with constant stirring until the target pH was reached. The carbon black was separated from the water by pressure filtration and soxhlet extracted with distilled water for 16 hours. The carbon black sample was then coffee milled, wet beaded, and dried in an oven for six hours at 125°C.

Typical examples of the affects of the surface treatments are shown in **Table 6**, where Volatile Content (Columbian Internal Procedure LS2-700) and pH (ASTM D1512) and Thermometric Titration (Columbian Internal Procedure LS2-702) values are shown, which reflect changes in the surface properties as a result of the surface treatments. As can be seen, the ozone oxidized carbon black shows an absolute 4.7% increase in volatile content, with a dramatic drop in pH and increase in thermometric titration (measure of heat of reaction between carbon black surface moieties and the base, butyl amine, that is used as the titrant), as well as an increase in moisture uptake (more polar groups), indicating the oxidation treatment was successful as the results show the typical increase in surface acidity normally observed for oxidized carbon blacks.

The amine treated carbon black shows a large increase in pH (oxidized CB used as feedstock, so acid groups neutralized) with a corresponding large drop in the thermometric titration value.

Amine treatment appears successful, but some acid sites possibly remain as evidenced by the pH value being <7 and possibly indicates that a carbon black with dual-surface-functionality has been obtained (basic amine and polar, and / or oxygen-based acid sites are both present).

The results of the surface treatment for these three carbon blacks shown in **Table 6** represent typical values and represent the carbon black types primarily used for the in-rubber evaluations.

The polymers used in this present compound composition invention listed in **Table 5** include Lanxess Buna VSL-5025-2, solution SBR with 50% vinyl and 25% styrene content, 37.5 phr of TDAE oil, and Mooney viscosity ML (1+4) @ 100°C of 47 MU; and Lanxess PBR 4003, a functionalized polymer containing carboxylic functionalization along the polymer chain, and composed of
Vinyl content of 45% +/-7% per weight of SBR portion
Styrol-content of 25% +/-5% per weight
Oil-content (TDAE) of 27% +/- 1.5% per weight
Mooney Viscosity ML (1+4) @ 100°C of 55MU +/- 10 MU
Content of functional COOH-groups of 35 mmol +/-10 mmol per kg oil-extended rubber.

### EXPERIMENTAL TESTING

The compound variables used in this evaluation are described in **Table 7**, and compound performance of the compound compositions of the present invention were compared against normal SBR polymer (Lanxess Buna VSL-5025-2), with fillers including regular, ozonated, peroxide or amine treated carbon blacks and silica, with and without silane, and with and without reactive mixing. The in-rubber compound performance properties are listed in **Tables 8 through 13**. The reactive mixing procedure recommended by Lanxess for use with Si69 includes mixing up to and maintaining a temperature of 150-160°C for 3 minutes, each for two passes, followed by addition of the curatives on a mill. The all SBR compounds (**Table 1** and **Tables 8 through 10**) were mixed on a Brabender Plasticorder Mini-Mixer, while the SBR/BR compounds (**Table 2 and Tables 11-13**) were mixed on a GK 1,5 litre intermeshing mixer. Dynamic Properties for the SBR/BR compounds shown in **Table 2**, were determined using an MTS servo-hydraulic machine for the strain amplitude sweeps and a Gabo Explexor machine was used for determining the temperature sweeps. Amplitude sweeps were conducted under the following conditions: Double shear test piece, 1 Hz frequency and amplitude range from 0.2 to 80% DSA at 60°C. The Temperature Sweeps were conducted under the following conditions: 1 % mean strain, 10 Hz frequency, 0,1 % amplitude from -120°C to 100°C. The cure accelerator, DPG (N,N-diphenylguanidine) was varied from 0.2 to 2.0 phr to improve and optimize cure rates due to effects on this property from the varied surface chemistry of the carbon blacks. Improved cure rates and in-rubber properties were obtained with the higher amount (2.0 phr) of the DPG.

### COMPOUND TESTING RESULTS

In-rubber properties evaluated included the following: MDR (ASTM D5289), Shore A Hardness (ASTM D2240), Rebound (ASTM D1054) and Stress-Strain (ASTM D412). Dynamic properties for the all SBR compounds in **Table 1** were determined using a TA Instruments Advanced Rheometric Expansion System (ARES) Model LS/M DMA, and were conducted in shear. Amplitude sweeps were conducted under the following conditions: 0% Mean Strain, 10Hz Frequency, and amplitude range from 0.2-125% ptp at 75°C. The Temperature sweeps were conducted under the following conditions; 0% Mean Strain, 10Hz Frequency, amplitudes of 8% (40°C and lower) and 15% ptp (50°C and higher), and temperature range from -5°C to 60°C.

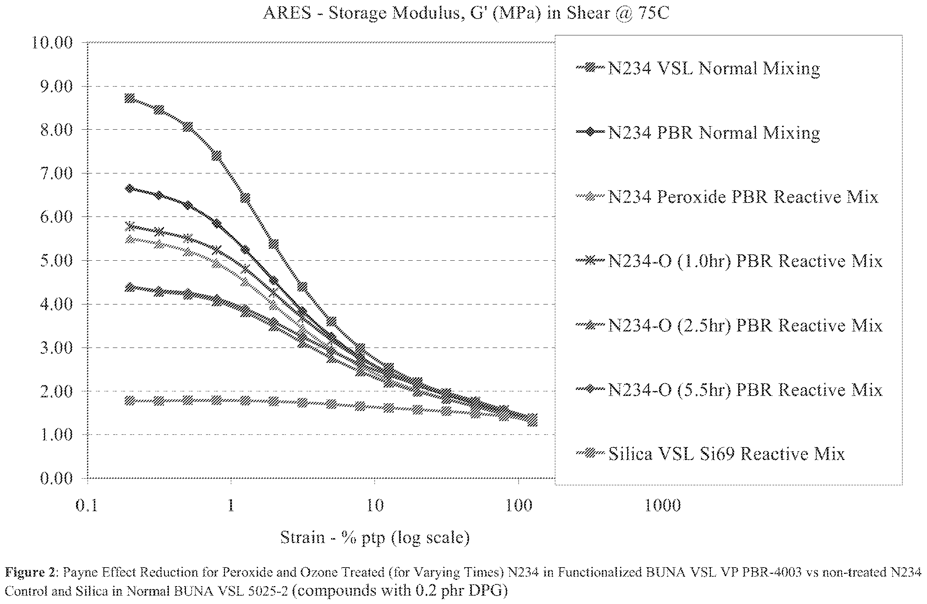

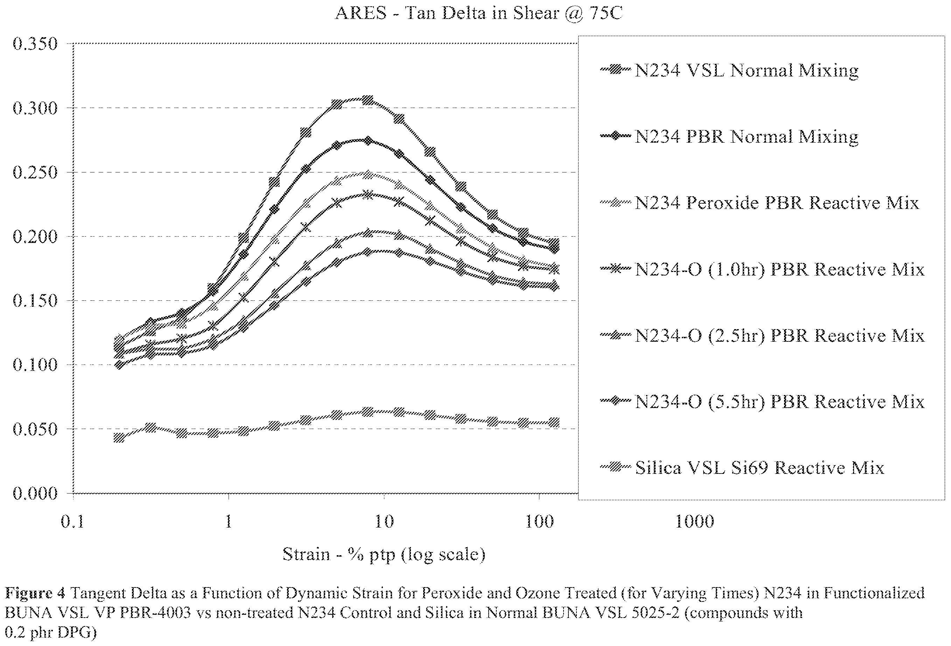

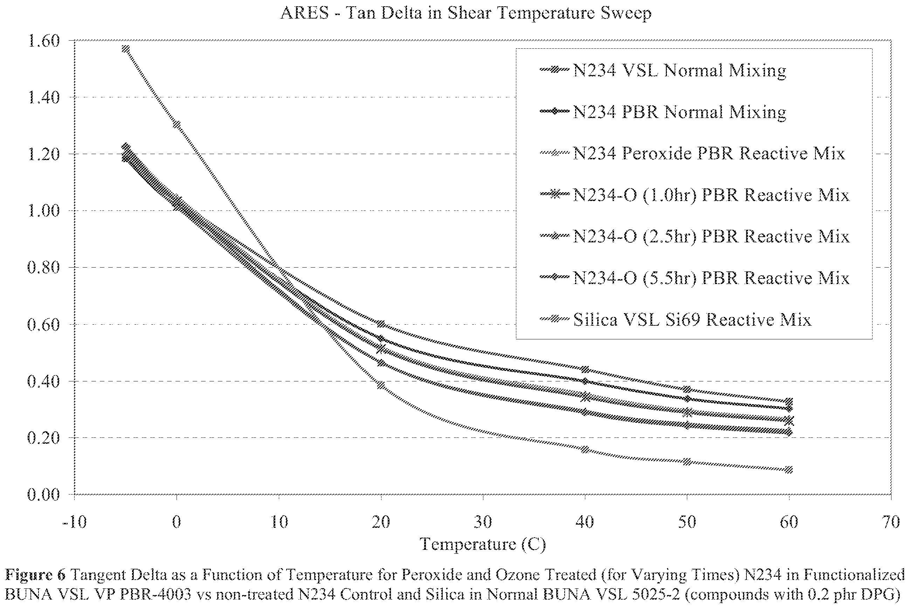

**Table 8** shows the performance advantages of the Inventive Compound compositions versus normal or Reference Compound compositions typically employed, and Figures 2, 4 and 6 show these results graphically for this data for the dynamic elastic modulus, G' as a function of strain, tangent delta maximum at 75°C as a function of strain, and for tangent delta as a function of temperature for rolling resistance and wet traction prediction, respectively. Compound 1 in **Table 8** shows normal N234 in the normal Buna VSL 5025-2 as the Reference Compound 1. Compound 2 shows the normal N234 in the chemically modified PBR-4003 and only a slight 10% reduction in the tangent delta at 75°C as well as a 17% reduction in the Payne Effect is realized. However, for the Inventive Compounds 3,4,5 and 6, significant and surprising decreases in tangent delta ranging from 19 to 39% are realized, with increasing levels of ozonation (oxidation) resulting in larger decreases in tangent delta. The all-Silica Compound 7, which can be considered a rolling resistance standard, showed tangent delta decrease relative to Compound 1 of 79%. The Payne Effect also shows significant decreases in the range of 33 to 42% for the Inventive Compounds 3, 4, 5 and 6, respectively, relative to the Reference Compounds 1 and 2. This feature appears to result in directionally better wet traction prediction at -5°C, as shown by the higher tangent delta for Compounds 3, 4, 5 and 6 at -5°C versus the Reference Compounds 1 and 2. Note the higher ozonation time (higher level of oxidation) results in the most improvement in lowering tangent delta at 75°C (predicting lower rolling resistance) and increasing tangent delta at -5°C (predicting increased wet traction), indicating the higher the level of surface oxidation, the better the performance of the compound composition in terms of lower predicted rolling resistance and improved predicted wet traction.

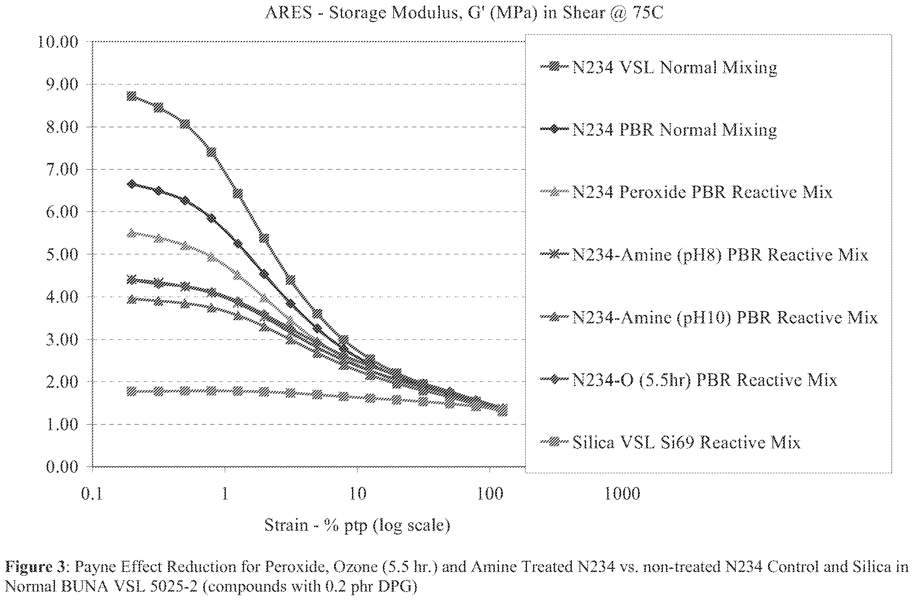

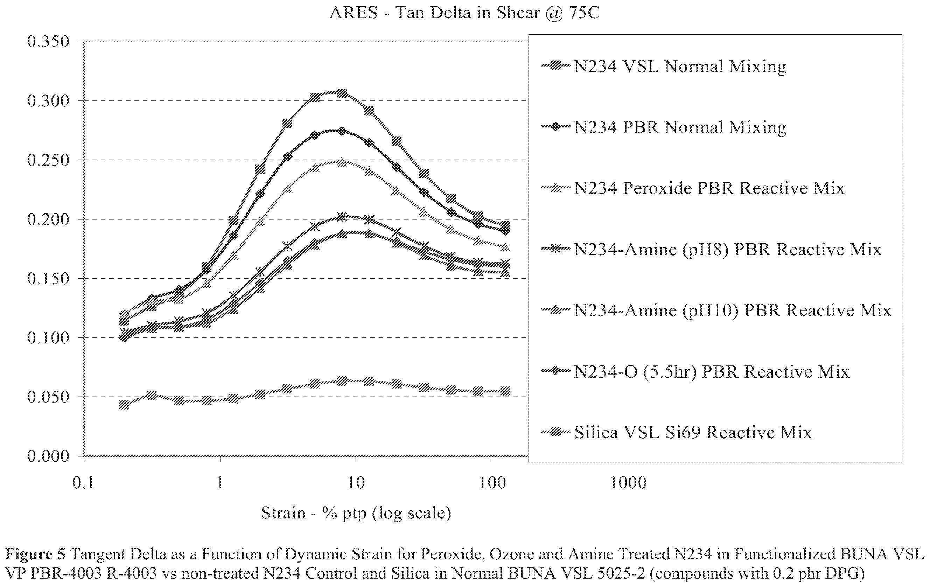

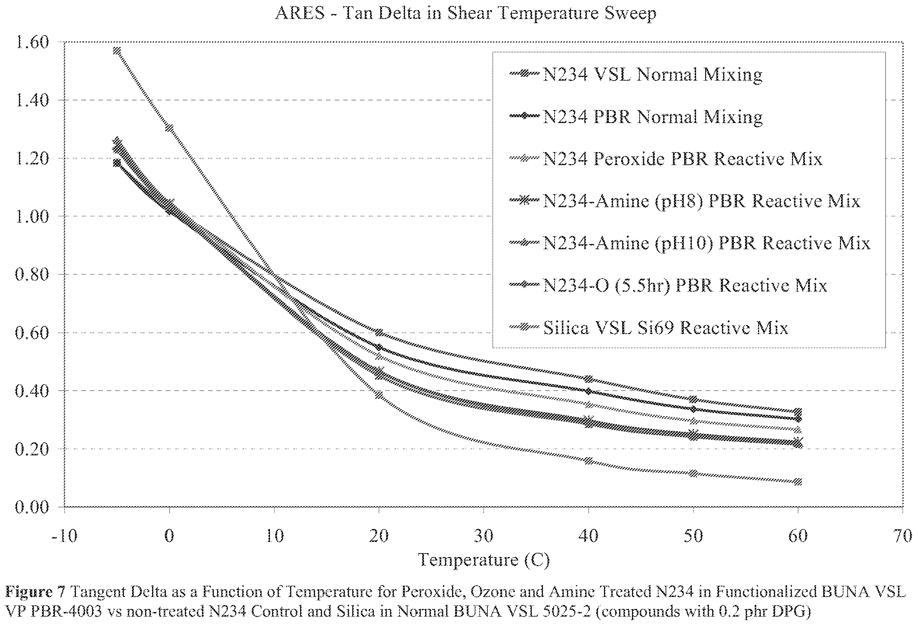

**Table 9** shows the performance advantages of the Inventive Compound compositions versus normal or Reference Compound compositions typically employed, and Figures 3, 5 and 7 show these results graphically for this data for G' as a function of strain, tangent delta at 75°C as a function of strain, and for tangent delta as a function of temperature for rolling resistance and wet traction prediction, respectively. Compound 1 in **Table 9** shows normal N234 in the normal Buna VSL 5025-2 as the Reference Compound. Compound 2 shows the normal N234 in the chemically modified PBR-4003. **Table 9** compares the Inventive Compounds 5 and 6 containing amine-treated carbon blacks to the Reference Compounds, Compounds 1, 2 and 7 and the Inventive Compounds 3 and 4 that contain oxidized carbon blacks. Note that the Compounds 5 and 6 that contain amine-treated carbon blacks also show large reductions in tangent delta at 75°C on the order of 34 and 39%, respectively versus the standard Compound 1. These tangent delta reductions for the Inventive Compounds 5 and 6 are very similar to the Inventive Compound 5 in **Table 8** (also shown as Compound 4 in **Table 9**), which has the lowest tangent delta response of all Inventive Compounds containing oxidized carbon blacks. One additional advantage of the Inventive Compounds 5 and 6 containing amine-treated carbon blacks is that the cure rate, or time to 90% cure, (t₉₀) is also reduced due to a basic surface chemistry present on the amine-treated carbon blacks, which is a desirable feature. The Payne Effect also shows significant decreases in the range of 57 to 62% for the Inventive Compounds 5 and 6, respectively, which is a larger decrease than for the Inventive Compounds containing the ozonated only carbon-blacks. This feature appears to result in directionally better wet traction prediction at -5°C, as shown by the higher tangent delta for Compounds 5 and 6 versus the Reference Compound 1 and the ozonated Inventive Compound 5 in **Table 8** (and shown as Compound 4 in Table 8). Thus utilization of amine-treated carbon blacks versus ozonated only carbon blacks in the Inventive Compound Compositions, appears to result in better curing characteristics and improved wet traction prediction with similar low rolling resistance properties.

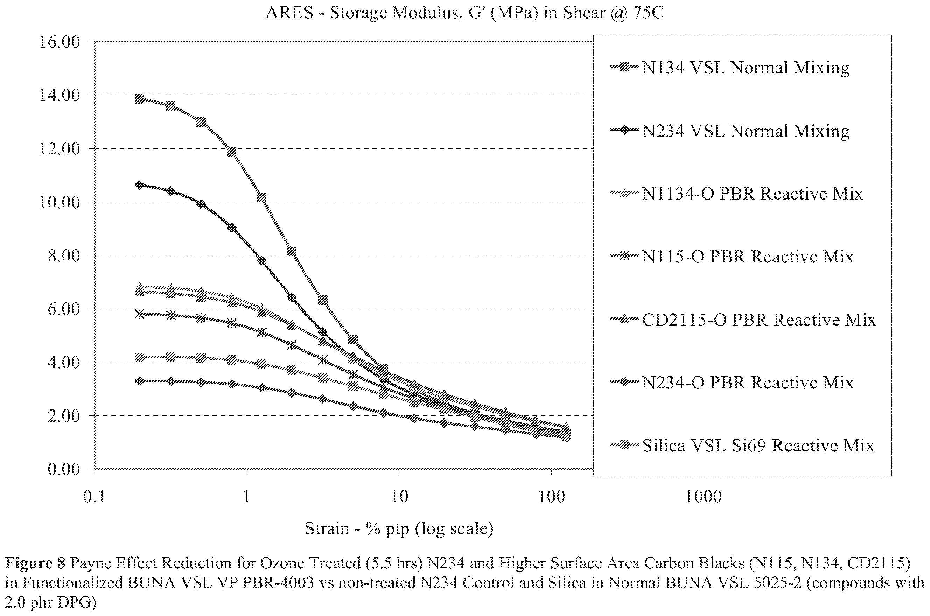

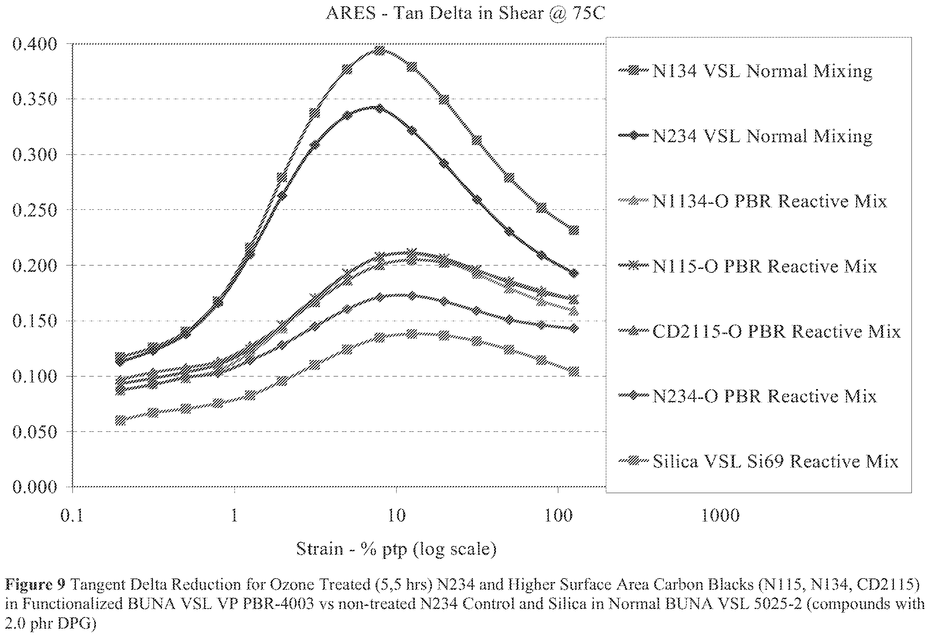

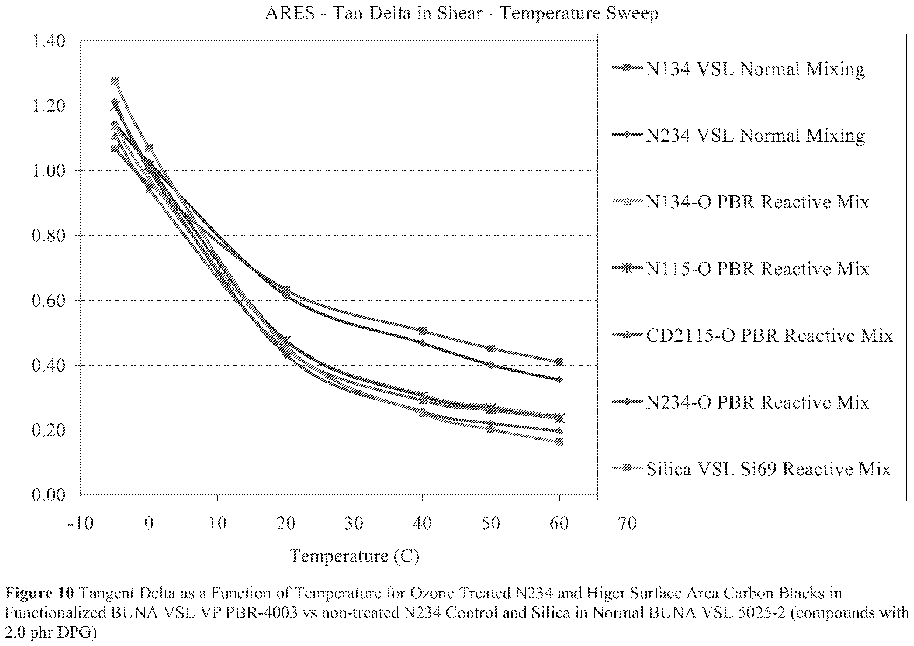

**Table 10** compares the Inventive Compounds containing ozonated carbon blacks of higher surface area than N234, which includes N115, N134 and CD2115 and Figures 8, 9 and 10 show these results graphically for this data for G' as a function of strain, tangent delta at 75°C as a function of strain, and for tangent delta as a function of temperature for rolling resistance and wet traction prediction, respectively. Reference Compounds 1 and 2 in **Table 10** show results for normal N234 and N134, respectively in the normal Buna VSL 5025-2. Compounds 3, 4, 5 and 6 show the results for the Inventive Compounds containing ozonated N234, N134, N115 and CD2115, respectively in the Lanxess PBR-4003, and for this data set, the amount of DPG was increased to 2.0 phr, which is more typical of formulations used in the rubber industry for silica compounds that require secondary accelerators due to their surface chemistry. The results show an overall better balance of cure, stress-strain and dynamic properties for all compounds. In this data set, the Inventive Compound 3 (ozonated N234, 5.5 hours) shows a more significant and surprising drop in tangent delta of 50% relative to the Reference Compound 1, and in this case, now more closely matches the all-Silica Reference Compound 7, which has a 60% drop in tangent delta relative to the Reference Compound 1. Surprisingly, the higher surface area carbon blacks, N115, N134 and CD2115 also show large reductions in tangent delta maximum at 75°C on the order of 40% relative to the Reference Compound 1 containing N234. Normally higher surface area carbon blacks give higher heat buildup and tangent delta values due to their higher propensity to form through-going networks, and the Reference Compound 2 in **Table 10** that contains normal N134 in normal Buna VSL 5025-2, demonstrates this phenomenon (15% higher tangent delta relative to the Reference Compound 1 containing N234). Relative to Reference Compound 2 containing N134, the Inventive Compound with ozonated N134 shows a 64% drop in tangent delta, which is a significant and surprising result. The same can be said for the N115 and especially the CD2115, which is a significantly finer or higher surface area carbon black. The Payne Effect also shows significant decreases in the range of 40 to 75% for the Inventive Compounds 3, 4, 5 and 6, which again is a large change and surprising result. Note that the all-Silica Compound 7, shows a 64% decrease in the Payne Effect relative to Reference Compound 1. The results in **Table 10** also show directionally better wet traction prediction at -5°C for Inventive Compounds 3 and 4, as shown by the higher tangent delta for the Inventive Compounds 3 and 4 versus the Reference Compound 1. Thus surface modification of higher surface area carbon blacks (higher surface area than N234) used in compound compositions containing PBR4003, can result in compounds with significantly lower heat buildup and predicted rolling resistance with directionally better to equal predicted wet traction versus normal Reference Compounds containing N234 or their respective counterparts.

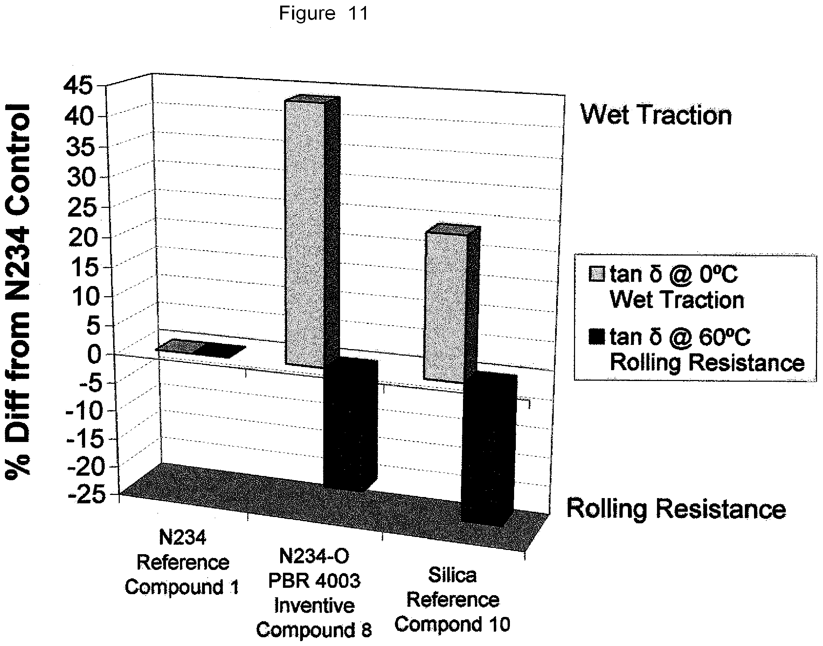

**Tables 11-13** show the performance advantages of the compositions of the Inventive Compounds versus normal or Reference Compound Compositions typically employed, but in this case SBR/BR blends as described in **Table 2**, more typical of an actual tire tread compound, are shown. **Table 11** shows the basic stress-strain properties indicating a very good balance of modulus, tensile strength and elongation for the Inventive Compounds 4, 6 and 8 versus the normal Reference Carbon Black Compound Compositions 1,9 and Silica Compound Compositions 10, 11. **Table 12** shows the Amplitude Sweep dynamic properties at 60°C, and shows that all Inventive Compounds 4, 6 and 8 give reduced tangent delta in the range of 9% to 21%, relative to the Reference Compound 1 and 9 for N234. The ozonation and amine treatments for Inventive Compounds 4 and 6 had higher tangent delta maximum than Inventive Compound 8, which has an optimal amount of surface oxygen groups or volatile content greater than the 5% level. Consequently, as shown in **Table 9**, the tangent delta response for Innovative Compound 8, most closely matched the tangent delta response for Silica Compounds 10 and 11. **Table 12** also shows the Temperature Sweep data for the SBR/BR Reference and Inventive Compounds, and as can be seen, the Inventive Compounds 4, 6 and 8 have tangent delta values at 0°C similar to or greater than the Silica Reference Compound 10, indicating equal to greater predicted wet traction response for the Inventive Compounds 4, 6 and 8. The improved predicted rolling resistance and wet traction of Inventive Compound 8 versus the Normal Reference N234 Compound 1 and the Silica Reference Compound 10, is shown graphically in Figure 11. **Table 13** shows the DIN Abrasion, Shore A Hardness and Rebound for the SRB/BR Reference and Inventive Compounds. The DIN Abrasion for the Inventive Compounds 4, 6 and 8 is similar to the Reference Compounds 1 and 9, and both are approximately 18% lower in DIN Abrasion than the Silica Reference Compound 10. For DIN Abrasion testing, a lower number indicates better resistance to abrasion, and hence, better or higher predicted treadwear. This result indicates that the Inventive Compounds 4, 6 and 8 have an overall improved compound performance versus the Silica Reference Compound 10, meaning the Inventive Compound 8 has equal to better predicted rolling resistance, wet traction and treadwear than the corresponding Silica Reference Compound 10.

These results indicate the Inventive Compounds have overcome the challenging hurdle of significantly and simultaneously improving rolling resistance, wet traction, treadwear and mixing and compound costs at the same time in a rubber compound.

The foregoing embodiments are presented by way of example only; the scope of the present invention is to be limited only by the following claims.

## Claims

1. A compound composition comprised of a surface-treated carbon black and a functionalized elastomer with functionalization along the elastomer chain, wherein the elastomer is a solution SBR and wherein the elastomer functionalization is composed of polar, carboxylic acid groups, and wherein the surface-treated carbon black is a carbon black that has been treated with peroxide or ozone, resulting in oxidation of the surface with polar, oxygen-containing functionalities; or wherein the surface-treated carbon black has been treated with an oxidizing agent followed by treatment with an amine-based compound, resulting in amine functionalization; or wherein the surface-treated carbon black has been treated with an oxidizing agent followed by treatment with an hydroxy-based compound; or wherein the surface-treated carbon black has been treated with a chlorinating agent followed by treatment with ammonia, resulting in amine functionalization.

2. The compound composition of claim 1 wherein the solution SBR is selected from blends of the SBR with BR, NR and EPDM, and the SBR.

3. The compound composition of claim 1 wherein the surface-treated carbon blacks' surface area range from 60 to 300 m²/g and the surface-treated carbon blacks' surface structure range from 50 to 180 cc/100g,

4. The compound composition of claim 3, wherein the surface-treated carbon black has been produced by a furnace, impingement or lampblack process.

5. The compound composition in claim 1, wherein the composition has both significantly lower hysteresis and improved wet traction compared to all-Silica-based compounds, and has improved DIN Abrasion and treadwear.

6. The compound composition of claim 1, wherein the elastomer is functionalized along the elastomer chain and has reductions in hysteresis as measured by dynamic testing and the decreased tangent delta factor at 60 to 75°C, and has improved wet traction as measured by dynamic testing and the increased tangent delta factor at 0 to -10°C.

7. The compound composition of claim 1, comprising a carbon black-elastomer compound having polar-polar or intermolecular hydrogen bonding between the carboxylic-acid functional groups along the elastomer chain and the oxygen-containing functional groups on the surface-treated carbon black, wherein the carbon black is oxidized or having acid-base interactions between the carboxylic-acid functional groups along the elastomer chain and the amine-containing functional groups on the surface-treated carbon black, wherein the carbon black is oxidized and amine treated, or chlorinated and ammonia-treated.

8. The compound composition of one of claims 1 to 7, wherein the surface-treated carbon black has been treated with an oxidizing agent followed by treatment with an amine-based compound, wherein the amine-based compound is a diamine compound or an amine compound with hydroxide.

9. A method for obtaining a compound composition comprised of a surface-treated carbon black and a functionalized elastomer with functionalization along the elastomer chain, wherein the elastomer is a solution SBR and wherein the elastomer functionalization is composed of polar, carboxylic acid groups, and wherein the components are reactively mixed to facilitate chemical interaction between a surface-treated carbon black and a functionalized elastomer, wherein the surface-treated carbon black is a carbon black that has been treated with peroxide or ozone, resulting in oxidation of the surface with polar, oxygen-containing functionalities; or wherein the surface-treated carbon black has been treated with an oxidizing agent followed by treatment with an amine-based compound, resulting in amine functionalization; or wherein the surface-treated carbon black has been treated with an oxidizing agent followed by treatment with an hydroxy-based compound; or wherein the surface-treated carbon black has been treated with a chlorinating agent followed by treatment with ammonia, resulting in amine functionalization, where reactive mixing is accomplished in a rubber mixer such that the compound is held at an elevated temperature for a certain time period.

10. The method of claim 9, wherein the surface-treated carbon black has been treated with an oxidizing agent followed by treatment with an amine-based compound, wherein the amine-based compound is a diamine compound or an amine compound with hydroxide.

11. Use of a compound composition of one of claims 1 to 8 for preparing a passenger, truck or racing tire.
**Table 1:**
| Solution SBR Test Recipe | |
|---|---|
| Ingredient | phr |
| First Pass* | |
| Variable 1: SSBR | 125 |
| Variable 2: Filler | 84 |
| Variable 3: Coupling | 0 or 6 |
| Sundex 790 | 6 |
| Zinc Oxide | 2.5 |
| Second Pass* | |
|---|---|
| Stearic Acid | 1.0 |
| Santoflex 6PPD | 2.0 |
| Microwax, SP-89 | 1.0 |
| Finish | |
|---|---|
| Sulfur | 1.4 |
| CBS | 1.7 |
| DPG | 0.2, 2.0 |
**Table 3**
| Normal versus Reactive Mixing Schemes | | | |
|---|---|---|---|
| Normal Mixing | | Reactive Mixing | |
| First Pass | | First Pass | |
| Mini Mixer: 45°C, 77 rpm | | Mini Mix: 90°C, 85 rpm | |
| mm:sec | | mm:sec | |
| 0:00 | s-SBR (VSL-5025-2) | 0:00 | s-SBR (PBR-4003) |
| 1:00 | ZnO, ½ Oil, ½ CB | 1:00 | ZnO, ½ Oil, ½ CB |
| 2:30 | ½ Oil, ½ CB | 2:30 | ½ Oil, ½ CB |
| 4:00 | Sweep | Varied | Sweep, Adjust rpm to maintain an internal mixing temperature between 150-160°C for 3 minutes |
| 9:00 | Discharge | | - Approximately 8 min total |
| | | | |
| Second Pass | | Second Pass | |
|---|---|---|---|
| Mini Mixer: 45°C, 60 rpm | | Mini Mix: 90°C, 85 rpm | |
| min:sec | | min:sec | |
| 0:00 | ½ MB, SA, 6PPD, Wax, ½ MB | 0:00 | ½ MB, SA, 6PPD, Wax, ½ MB |
| 4:00 | Sweep | Varied | Sweep, Adjust rpm to maintain an internal mixing temperature between 150-160°C for 3 minutes |
| 7:00 | Discharge | | - Approximately 6 min total |
| | .3 | | |
| Final Stage | | Final Stage | |
|---|---|---|---|
| Mini Mill: 45°C, 20 rpm | | Mini Mill: 45°C, 20 rpm | |
| | Pass through mill once | | Pass through mill once |
| | Band, Add Sulfur, CBS, DPG | | Band, Add Sulfur, CBS, DPG |
| | Cross blend 6 times | | Cross blend 6 times |
| | Band 30sec and sheet off | | Band 30sec and sheet off |
**TABLE 2**
| Compound composition | | | | |
|---|---|---|---|---|
| | | | | |
| | VSL 5025-2 | BPR 4003 | Silica 65 | Silica 70 |
| BUNA VSL 5025-2 | 89,4 | | 89,4 | 96,3 |
| PBR 4003 STNO 4622L | | 89,4 | | |
| BUNA CB 24 | 35 | 35 | 35 | 30 |
| VIVATEC 500 | 7 | 7 | 11,9 | 10 |
| STEARIC ACID | 2 | 2 | 2 | 2 |
| VULKANOX 4020/LG | 2 | 2 | 2 | 2 |
| VULKANOX HS/LG | 2 | 2 | 2 | 2 |
| N234 Carbon black | 75 | 75 | | |
| ZINC OXIDE Red Seal | 4 | 4 | 4 | 4 |
| ANTILUX 654 | 2,5 | 2,5 | 2,5 | 2,5 |
| | | | | |
| N375 Carbon black | | | 7 | 7 |
| ULTRASIL 7000 GR | | | 90 | 90 |
| AFLUX 37 (GE 1837) | | | 3 | 3 |
| SI 69 | | | 7,2 | 7,2 |
| VULKACIT D/EG-C | | | 2,2 | 2,2 |
| VULKACIT NZ/EGC | 1,5 | 1,5 | 1,6 | 16 |
| SULPHUR | 1,9 | 1,9 | 1,6 | 1,6 |
**Table 4**
| Surface Area (NSA) and Structure (OAN) Levels of Carbon Blacks | | |
|---|---|---|
| **Grade** | **NSA, m²/g** | **OAN, cc/100g** |
| N234 | 120 | 124 |
| N134 | 134 | 128 |
| N115 | 136 | 115 |
| CD2115 | 179 | 127 |
**Table 5**
| Polymers and As-Manufactured and Surface-Treated Carbon Blacks | | |
|---|---|---|
| A# | Product | Description |
| A-51887 | Oil Extended SSBR | Lanxess Buna VSL 5025-2 (regular polymer) |
| A-51778 | Oil Extended SSBR | Lanxess Buna VSL VP PBR-4003 (functionalized polymer) |
| A-43776 | N234 Standard | Columbian Control |
| A-51801 | N234 Ozonated | A-43776, Ozonated 5.5 hours, 9/24/08 |
| A-52672 | N234 Ozonated | A-43776, Ozonated 2.5 hours, 2/12/09 |
| A-52796 | N234 Ozonated | A-43776, Ozonated 1.0 hours, 2/25/09 |
| A-52519 | N234 Peroxide | A-43776, Peroxide Treated at 35%, 1/22/09 |
| A-52517 | N234 Amine | A-51801, Amine Treated at pH 8 |
| A-52518 | N234 Amine | A-51801, Amine Treated at pH 10 |
| A-53173 | N134 Ozonated | A-52946, Ozonated 5.5 hours, 4/23/09 |
| A-53172 | N115 Ozonated | A-52941, Ozonated 5.5 hours, 4/24/09 |
| A-53174 | CD2115 Ozonated | A-44046, Ozonated 5.5 hours, 4/22/09 |
| A-51877 | Silica | Z1165 (precipitated) |
**Table 6**
| Typical Surface Properties of Functionalized Carbon Blacks | | | | | | |
|---|---|---|---|---|---|---|
| | **Grade** | **Description** | **Volatile** | **Moisture** | **pH** | **Thermometric Titration, mcal/g** |
| A-43776 | N234 | Control | 2.1 | 0.7 | 6.8 | 451 |
| A-52424 | N234 | Oxidized | 6.8 | 3.6 | 1.6 | 7735 |
| A-52481 | N234 | Amine Treated | 5.2 | 0.9 | 5.6 | 1988 |
**Table 7**
| Compound Variables | | | |
|---|---|---|---|
| 1. Polymer | 2. Filler | 3. Coupling Agent | 4. Mixing Procedure |
| RP: Regular SSBR VSL-5025-2 | N234, N134, N115, CD2115 | None | Normal (N) |
| FP: Functionalized SSBR PBR-4003 | N234-O (Ozonated) | Si69 | Reactive (R) |
| | N234-P (Peroxide Treated) | | |
| | N234-A (Amine Treated) | | |
| | N343 | | |
| | N343-O (Ozonated) | | |
| | Silica | | |
**TABLE 8**
| | **Compound No.** | **1** | **2** | **3** | **4** | **5** | **6** | **7** |
|---|---|---|---|---|---|---|---|---|
| | **Carbon Black** | N234 | N234 | N234 | N234 | N234 | N234 | Silica |
| | **Polymer** | VSL 5025-2 | PBR4003 | PBR4003 | PBR4003 | PBR4003 | PBR4003 | VSL 5025-2 |
| | **CB Treatment** | None | None | Peroxide | Ozone (1.0hr) | Ozone (2.5hr) | Ozone (5.5hr) | None |
| | **Coupling Agent** | None | None | None | None | None | None | Si69 |
| | **Mixing Method** | Normal | Normal | Reactive | Reactive | Reactive | Reactive | Reactive |
| **MDR @165°C** | Motor: | 30' | 30' | 30' | 30' | 30' | 30' | 60' |
| Min Torque | dNm | 3.2 | 3.1 | 2.8 | 2.7 | 2.8 | 2.8 | 2.9 |
| Max Torque | dNm | 15.6 | 15.2 | 13.4 | 13.3 | 13.5 | 13.2 | 15.6 |
| Max-Min Torque | dNm | 1204 | 12 | 10.6 | 10.6 | 1 | 10.3 | 12.7 |
| tₛ₁ (scorch) | min | 1.7 | 1.6 | 2 | 1.9 | 1.9 | 2.1 | 2.5 |
| T₅₀ | min | 2.8 | 3.1 | 3.4 | 3.7 | 5.6 | 6.7 | 9 |
| T₉₀ | min | 8.1 | 9 | 11.8 | 13.5 | 16.9 | 20 | 40 |
| | | | | | | | | |
| **Hardness** | Shore A | 72.7 | 75.5 | 71.1 | 71.9 | 71.9 | 71.9 | 66.3 |
| **Tensile** | | | | | | | | |
|---|---|---|---|---|---|---|---|---|
| 100 % Modulus | MPa | 4 | 4.7 | 4.6 | 4.8 | 4.9 | 5 | 4.2 |
| 200 % Modulus | MPa | 10.2 | 11.8 | 11.7 | 12.2 | 12.4 | 12.3 | 15.4 |
| 300 % Modulus | MPa | 15.7 | --- | --- | --- | --- | --- | --- |
| Tensile Strength | MPa | 16.7 | 15.9 | 15.7 | 17 | 16.7 | 15.8 | 16.9 |
| Elongation | % | 330 | 280 | 270 | 290 | 270 | 260 | 210 |
| | | | | | | | | |
| **Rebound** | % | 12.1 | 13.1 | 13.7 | 14.1 | 14.5 | 14.6 | 14.2 |
| | | | | | | | | |
| **Dynamic Properties** | | | | | | | | |
|---|---|---|---|---|---|---|---|---|
| *Rolling Resistance* | | | | | | | | |
| Tan Delta Max | 76 °C | 0.306 | 0.274 | 0.248 | 0.232 | 0.203 | 0.188 | 0.063 |
| Tan Delta, Normalized | | 100 | 90 | 81 | 76 | 66 | 61 | 21 |
| *Wet Traction* | | | | | | | | |
|---|---|---|---|---|---|---|---|---|
| Tan Delta | -5°C | 1.18 | 1.18 | 1.23 | 1.21 | 1.20 | 1.23 | 1.57 |
| Tan Delta, Normalized | | 100 | 100 | 104 | 103 | 102 | 104 | 133 |
| *Payne Effect* | | | | | | | | |
|---|---|---|---|---|---|---|---|---|
| ΔG' (0.8 to 80% ptp) | MPa | 5.91 | 4.33 | 3.47 | 3.67 | 2.59 | 2.54 | 0.37 |
| ΔG' Normalized | MPa | 100 | 83 | 67 | 60 | 58 | 59 | 17 |
**TABLE 9**
| | **Compound No.** | **1** | **2** | **3** | **4** | **5** | **6** | **7** |
|---|---|---|---|---|---|---|---|---|
| | **Carbon Black** | N234 | N234 | N234 | N234 | N234 | N234 | Silica |
| | **Polymer** | VSL 5025-2 | PBR4003 | PBR4003 | PBR4003 | PBR4003 | PBR4003 | VSL 5025-2 |
| | **CB Treatment** | None | None | Peroxide | Ozone (5.5hr) | Amine, pH =8 | Amine, pH=10 | None |
| | **Coupling Agent** | None | None | None | None | None | None | Si69 |
| | **Mixing Method** | Normal | Normal | Reactive | Reactive | Reactive | Reactive | Reactive |
| **MDR @165°C** | Motor: | 30' | 30' | 30' | 30' | 30' | 30' | 60' |
| Min Torque | dNm | 3.2 | 3.1 | 2.8 | 2.8 | 2.8 | 2.8 | 2.9 |
| Max Torque | dNm | 15.6 | 15.2 | 13.4 | 13.2 | 12.9 | 13.1 | 15.6 |
| Max-Min Torque | dNm | 12.4 | 12 | 10.6 | 10.3 | 10.1 | 10.3 | 12.7 |
| tₛ₁ (scorch) | mm | 1.7 | 1.6 | 2 | 2.1 | 1.9 | 1.8 | 2.5 |
| T₅₀ | min | 2.8 | 3.1 | 3.4 | 6.7 | 4.4 | 3.7 | 9 |
| T₉₀ | min | 8.1 | 9 | 11.8 | 20 | 15.7 | 14.3 | 40 |
| | | | | | | | | |
| **Hardness** | Shore A | 72.7 | 75.5 | 71.1 | 71.9 | 71.1 | 69.7 | 66.3 |
| **Tensile** | | | | | | | | |
|---|---|---|---|---|---|---|---|---|
| 100 % Modulus | MPa | 4 | 4.7 | 4.6 | 5 | 4.8 | 4.4 | 4.2 |
| 200 % Modulus | MPa | 10.2 | 11.8 | 11.7 | 12.3 | 12.3 | 11.8 | 15.4 |
| 300 % Modulus | MPa | 15.7 | --- | --- | --- | --- | --- | --- |
| Tensile Strength | MPa | 16.7 | 15.9 | 15.7 | 15.8 | 17.1 | 16.2 | 16.9 |
| Elongation | % | 330 | 280 | 270 | 260 | 280 | 270 | 210 |
| | | | | | | | | |
| **Rebound** | % | 12.1 | 13.1 | 13.7 | 14.6 | 14.5 | 14.7 | 14.2 |
| **Dynamic Properties** | | | | | | | | |
|---|---|---|---|---|---|---|---|---|
| *Rolling Resistance* | | | | | | | | |
| Tan Delta Max | 75 °C | 0.306 | 0.274 | 0.248 | 0.188 | 0.202 | 0.188 | 0.063 |
| Tan Delta, Normalized | | 100 | 90 | 81 | 61 | 66 | 61 | 21 |
| *Wet Traction* | | | | | | | | |
|---|---|---|---|---|---|---|---|---|
| Tan Delta | -5°C | 1.18 | 1.18 | 1.23 | 1.23 | 1.25 | 1.26 | 1.57 |
| Tan Delta, Normalized | | 100 | 100 | 104 | 104 | 106 | 107 | 133 |
| *Payne Effect* | | | | | | | | |
|---|---|---|---|---|---|---|---|---|
| ΔG' (0.8 to 80% ptp) | MPa | 5.91 | 4.33 | 3.47 | 2.54 | 2.55 | 2.26 | 0.37 |
| ΔG' Normalized | MPa | 100 | 83 | 67 | 59 | 43 | 38 | 17 |
**TABLE 10**
| | **Compound No.** | **1** | **2** | **3** | **4** | **5** | **6** | **7** |
|---|---|---|---|---|---|---|---|---|
| | **Carbon Black** | N234 | N134 | N234 | N134 | N115 | CD2115 | Silica |
| | **Polymer** | VSL 5025-2 | VSL 5025-2 | PBR4003 | PBR4003 | PBR4003 | PBR4003 | VSL 5025-2 |
| | **CB Treatment** | None | None | Ozone, (5.5hr) | Ozone, (5.5hr) | Ozone, (5.5hr) | Ozone, (5.5hr) | None |
| | **Coupling Agent** | None | None | None | None | None | None | Si69 |
| | **Mixing Method** | Normal | Normal | Reactive | Reactive | Reactive | Reactive | Reactive |
| **Mooney scorch** | | | | | | | | |
| ML (t3) @ 121°C | min | 13.0 | 12.8 | 16.1 | 14.5 | 13.2 | 15.3 | 19.8 |
| ML (t5) @ 121°C | min | 13.4 | 15.3 | 20.1 | 16.5 | 15.1 | 17.3 | 22.2 |
| **Mooney Viscosity** | | | | | | | | |
|---|---|---|---|---|---|---|---|---|
| ML 1+4 @ 100°C | MU | 88.3 | 97.1 | 69 | 114 | 107 | 200 | 100 |
| | | | | | | | | |
| **MDR 165°C** | | | | | | | | |
|---|---|---|---|---|---|---|---|---|
| Min Torque | dNm | 4.2 | 4.8 | 2.4 | 4.7 | 4.2 | 5.5 | 4.8 |
| Max Torque | dNm | 11.7 | 20.0 | 12.2 | 12.5 | 18.6 | 19.7 | 25.9 |
| Max-Min Torque | dNm | 7.5 | 15.2 | 9.8 | 7.9 | 14.4 | 14.2 | 21.1 |
| Ts1 Scorch | min | 1.8 | 1.3 | 1.8 | 1.9 | 1.2 | 1.2 | 0.7 |
| T50 | min | 2.9 | 2.3 | 3.2 | 6.4 | 2.9 | 5.0 | 2.8 |
| T90 | min | 10.9 | 8.6 | 12.2 | 20.3 | 12.4 | 17.6 | 14.0 |
| | | | | | | | | |
| **Hardness** | Shore A | 77.3 | 74.5 | 69.3 | 74.7 | 72.7 | 76.1 | 69.5 |
| | | | | | | | | |
| **Tensile** | | | | | | | | |
|---|---|---|---|---|---|---|---|---|
| 100 % Modulus | MPa | 5.8 | 3.9 | 4.2 | 5.5 | 4.4 | 5.3 | 3.3 |
| 200 % Modulus | MPa | 10.5 | 10 | 10.9 | 13.1 | 11.1 | 11.3 | 10.2 |
| 300 % Modulus | MPa | --- | 14.5 | --- | --- | --- | --- | --- |
| Tensile Strength | MPa | 13.8 | 15.3 | 16.1 | 14.8 | 15 | 11.3 | 14.6 |
| Elongation | % | 219 | 303 | 278 | 221 | 252 | 176 | 260 |
| | | | | | | | | |
| **Rebound** | % | 12.6 | 12.6 | 14.3 | 15.8 | 14 | 14.1 | 12.9 |
| | | | | | | | | |
| **Dynamic Properties** | | | | | | | | |
|---|---|---|---|---|---|---|---|---|
| *Rolling Resistance* | | | | | | | | |
| Tan Delta Max. | 75°C | 0.342 | 0.394 | 0.172 | 0.211 | 0.211 | 0.205 | 0.138 |
| Tan Delta Normalized | | 100 | 114 | 50 | 62 | 62 | 60 | 40 |
| *Wet Traction* | | | | | | | | |
|---|---|---|---|---|---|---|---|---|
| tan Delta. | -5°C | 1.14 | 1.07 | 1.21 | 1.2 | 1.14 | 1.11 | 1.28 |
| Tan Delta Normalized | | 100 | 79 | 106 | 105 | 100 | 97 | 112 |
| *Payne Effect* | | | | | | | | |
|---|---|---|---|---|---|---|---|---|
| Δ G' 0.8-80 | MPa | 7.46 | 10.38 | 1.86 | 4.63 | 3.90 | 4.40 | 2.65 |
| Δ G' Normalized | | 100 | 139 | 25 | 62 | 52 | 59 | 36 |
**TABLE 11**
| Stress-strain Properties for SBR/BR Roference and Inventive Compounds | | | | | | | | | | | | |
|---|---|---|---|---|---|---|---|---|---|---|---|---|
| Compound No | | 1 | 2 | 3 | 4 | 5 | 6 | 7 | 8 | 9 | 10 | 11 |
| Carbon Black | | N234 | N234 | N234 | N234 | N234 | N234 | N234 | N234 | N234 | Ultrasil 7000GR | Ultrasil 7000GR |
| Polymer, SBR | | VSL-5025-2 | PBR 4003 | VSL-5025-2 | PBR 4003 | VSL-5025-2 | PBR 4003 | VSL-5025-2 | PBR 4003 | VSL-5025-2 | VSL-5025-2 (65) | VSL-5025-2 (70) |
| Polymer, BR | | BUNA CR24 | BUNA CR24 | BUNA CR24 | BUNA CR24 | BUNA CR24 | BUNA CR24 | BUNA CR24 | BUNA CR24 | BUNA CR24 | BUNA CR24 | BUNA CR24 |
| CB Treatment | | None | None | Amine, pH=8 | Amine, pH=8 | Ozone 5.5 hrs | Ozone 5.5 hrs | Ozone 5.5 hrs | Ozone 5.5 hrs | None | None | None |
| Coupling Agent | | None | None | None | None | None | None | None | None | None | Si69 | Si69 |
| Mixing Method | | Normal | Normal | Reactive | Reactive | Reactive | Reactive | Reactive | Reactive | Normal | Reactive | Reactive |
| S10 | MPa | 0,7 | 0,6 | 0,7 | 0,7 | 0,8 | 0,7 | 0,7 | 0,6 | 0,7 | 0,6 | 0,6 |
| S25 | MPa | 1,1 | 1,1 | 1,1 | 1,1 | 1,2 | 1,3 | 1,1 | 1,1 | 1,1 | 1 | 1 |
| S50 | MPa | 1,6 | 1,6 | 1,6 | 1,7 | 1,8 | 2 | 1,6 | 1,6 | 1,5 | 1,4 | 1,4 |
| S100 | MPa | 2,7 | 2,9 | 2,8 | 3,1 | 3,1 | 3,6 | 2,7 | 3 | 2,7 | 2,6 | 2,5 |
| S300 | MPa | 13 | 14,5 | 12,8 | 14,5 | 13,7 | 15,5 | 11,1 | 13,6 | 13,1 | 11,5 | 12,4 |
| E@B Median | % | 449 | 422 | 457 | 450 | 417 | 393 | 477 | 413 | 416 | 437 | 393 |
| Stress Median | MPa | 20,7 | 21,4 | 20,2 | 22,9 | 19,9 | 20,5 | 19,6 | 19,7 | 19,1 | 18,9 | 17,4 |
**TABLE 12**
| Dynamic Properties for SBR/BR Reference and Inventive Compounds | | | | | | | | | | | | |
|---|---|---|---|---|---|---|---|---|---|---|---|---|
| Compound No | | 1 | 2 | 3 | 4 | 5 | 6 | 7 | 8 | 9 | 10 | |
| Carbon Black | | N234 | N234 | N234 | N234 | N234 | N234 | N234 | N234 | N234 | Ultrasil 7000GR | Ultrasil 7000GR |
| Polymer, SBR | | VSL-5025-2 | PBR 4003 | VSL-5025-2 | PBR 4003 | VSL-5025-2 | PBR 4003 | VSL-5025-2 | PBR 4003 | VSL-5025-2 | VSL-5025-2 (65) | VSL-5025-2 (70) |
| Polymer, BR | | BUNA CR24 | BUNA CR24 | BUNA CR24 | BUNA CR24 | BUNA CR24 | BUNA CR24 | BUNA CR24 | BUNA CR24 | BUNA CR24 | BUNA CR24 | BUNA CR24 |
| CB Treatment | | None | None | Amine, pH=8 | Amine, pH=8 | Ozone 5.5 hrs | Ozone5.5 hrs | Ozone 5.5 hrs | Ozone 5.5 hrs | None | None | None |
| Coupling Agent | | None | None | None | None | None | None | None | None | None | Si69 | Si69 |
| Mixing Method | | Normal | Normal | Reactive | Reactive | Reactive | Reactive | Reactive | Reactive | Normal | Reactive | Reactive |
| Amplitude sweep data (60°C, 1 Hz) | | | | | | | | | | | | |
|---|---|---|---|---|---|---|---|---|---|---|---|---|
| G° (0,5%) | MPa | 3,59 | 3,11 | 3,68 | 2,94 | 4,22 | 3,1 | 3,64 | 2,83 | 4,13 | 2,79 | 2,87 |
| G° -15% | MPa | 1,28 | 1,22 | 1,3 | 1,23 | 1,47 | 1,34 | 1,35 | 1,27 | 1,36 | 1,2 | 1,22 |
| tan d (max) | | 0,264 | 0,248 | 0,261 | 0,233 | 0,252 | 0,216 | 0,246 | 0,203 | 0,273 | 0,175 | 0,177 |
| Temperature sweep data (10Hz, 1 Kmin-t) | | | | | | | | | | | | |
|---|---|---|---|---|---|---|---|---|---|---|---|---|
| E°(0 °C) | MPa | | 62,8 | 63,3 | 59,7 | 57,5 | 58,6 | 47,5 | 38,4 | 60,4 | 43,5 | |
| E°(0 °C) | MPa | 63.5 13,0 | 15,9 | 12,7 | 15,8 | 11,8 | 14,4 | 10,2 | 11,7 | 12,8 | 11,5 | |
| E°(0 °C) | MPa | 64,8 | 64,8 | 64,6 | 61,7 | 58,7 | 58,4 | 48,5 | 40,1 | 61,8 | 45,0 | |
| tan d (0 °C) | | 0,205 | 0,253 | 0,201 | 0,264 | 0,204 | 0,254 | 0,215 | 0,304 | 0,212 | 0,263 | |
| E°(23 °C) | MPa | 35,5 | 32,3 | 37,9 | 29,7 | 34.0 | 30,1 | 27,0 | 19,0 | 34,3 | 23,8 | |
| E°(23 °C) | MPa | 6,2 | 6,3 | 6,4 | 6,6 | 5,7 | 5,3 | 4,5 | 3,6 | 6,2 | 4,4 | |
| E°(23 °C) | MPa | 36,0 | 32,9 | 38,4 | 30,2 | 34,5 | 30,5 | 27,4 | 19,3 | 34,9 | 24,2 | |
| tan d (23 °C) | | 0,175 | 0,194 | 0,169 | 0,186 | 0,167 | 0,178 | 0,168 | 0,19 | 0,181 | 0,184 | |
| E°(60 °C) | MPa | 18,4 | 15,8 | 20,5 | 15,0 | 19,1 | 15,7 | 14,6 | 9,8 | 17,7 | 12,8 | |
| E°(60 °C) | MPa | 2,5 | 2,3 | 2,7 | 1,9 | 2,3 | 1,8 | 1,7 | 1,1 | 2,6 | 1,4 | |
| E°(60 °C) | MPa | 18,6 | 16,0 | 20,7 | 15,1 | 19,2 | 15,8 | 14,7 | 9,8 | 17,9 | 12,9 | |
| tan d (60 °C) | | 0,137 | 0,143 | 0,131 | 0,124 | 0,122 | 0,116 | 0,119 | 0,115 | 0,145 | 0,111 | |
**TABLE 13**
| **Abrasion, Hardness, Rebound Properties for SBR/BR Reference and Inventive Compounds** | | | | | |
|---|---|---|---|---|---|
| | **Abrasion** | **Shore A Hardness** | | **Rebound (%)** | |
| | **(mm³)** | **@23°C** | **@60°C** | **@23°C** | **@60°C** |
| | | | | | |
| VSL 5025-2 N234 Compound 1 | 65 | 65 | 59 | 28 | 44 |
| VSL 5025-2 N234 rpt Compound 9 | 70 | 67 | 57 | 28 | 43 |
| ***N234 O3* + *Amine*** | | | | | |
|---|---|---|---|---|---|
| VSL 5025-2 Compound 3 | 75 | 66 | 59 | 28 | 43 |
| ***N234 O3*** | | | | | |
|---|---|---|---|---|---|
| VSL 5025-2 Compound 5 | 70 | 67 | 61 | 29 | 46 |
| VSL 5025-2 optimised Compound 7 | 74 | 65 | 56 | 31 | 49 |
| | **Abrasion** | **Shore A Hardness** | | **Rebound (%)** | |
|---|---|---|---|---|---|
| | **(mm³)** | **@23°C** | **@60°C** | **@23°C** | **@60°C** |
| | | | | | |
| VSL 5025-2 Silica 65phr SSBR Compound 10 | 82 | 63 | 56 | 33 | 55 |
| PBR 4003 N234 Compound 2 | 72 | 66 | 60 | 27 | 45 |
| ***N234 O3* + *Amine*** | | | | | |
|---|---|---|---|---|---|
| PBR 4003 Compound 4 | 71 | 67 | 59 | 28 | 47 |
| ***N234 O3*** | | | | | |
|---|---|---|---|---|---|
| PBR 4003 Compound 6 | 69 | 68 | 60 | 30 | 51 |
| PBR 4003 optimised Compound 8 | 69 | 64 | 56 | 33 | 64 |

## Patentansprüche

1. Mischungszusammensetzung, bestehend aus einem oberflächenbehandelten Ruß und einem funktionalisierten Elastomer mit Funktionalisierung entlang der Elastomerkette, wobei das Elastomer ein Lösungs-SBR ist und wobei die Elastomerfunktionalisierung aus polaren Carbonsäuregruppen besteht, und wobei der oberflächenbehandelte Ruß ein Ruß ist, der mit Peroxid oder Ozon behandelt wurde, was zu einer Oxidation der Oberfläche mit polaren, sauerstoffhaltigen Funktionalitäten führt; oder wobei der oberflächenbehandelte Ruß mit einem Oxidationsmittel behandelt wurde, gefolgt von einer Behandlung mit einer Verbindung auf Aminbasis, was zu einer Aminfunktionalisierung führt; oder wobei der oberflächenbehandelte Ruß mit einem Oxidationsmittel behandelt wurde, gefolgt von einer Behandlung mit einer Verbindung auf Hydroxybasis; oder wobei der oberflächenbehandelte Ruß mit einem Chlorierungsmittel behandelt wurde, gefolgt von einer Behandlung mit Ammoniak, was zu einer Aminfunktionalisierung führt.

2. Mischungszusammensetzung nach Anspruch 1, wobei der Lösungs-SBR aus Gemischen des SBR mit BR, NR und EPDM, und dem SBR ausgewählt ist.

3. Mischungszusammensetzung nach Anspruch 1, wobei die Oberfläche des oberflächenbehandelten Rußes im Bereich von 60 bis 300 m²/g und die Oberflächenstruktur des oberflächenbehandelten Rußes im Bereich von 50 bis 180 cm³/100 g liegt.

4. Mischungszusammensetzung nach Anspruch 3, wobei der oberflächenbehandelte Ruß durch ein Furnace-, Prall- oder Flammrußverfahren hergestellt worden ist.

5. Mischungszusammensetzung nach Anspruch 1, wobei die Zusammensetzung sowohl eine signifikant geringere Hysterese als auch eine verbesserte Nass-Traktion hat im Vergleich zu All-Silica-basierten Mischungen, und einen verbesserten DIN-Abrieb und Laufflächenverschleiß hat.

6. Mischungszusammensetzung nach Anspruch 1, wobei das Elastomer entlang der Elastomerkette funktionalisiert ist und eine Verringerung der Hysterese hat, wie durch dynamisches Testen und den verringerten Tangens-Delta-Faktor bei 60 bis 75 °C gemessen, und eine verbesserte Nass-Traktion hat, wie durch dynamisches Testen und den erhöhten Tangens-Delta-Faktor bei 0 bis -10 °C gemessen.

7. Mischungszusammensetzung nach Anspruch 1, die eine Ruß-Elastomer-Mischung mit einer polar-polaren oder intermolekularen Wasserstoffbindung zwischen den funktionellen Carbonsäuregruppen entlang der Elastomerkette und den Sauerstoff enthaltenden funktionellen Gruppen auf dem oberflächenbehandelten Ruß aufweist, wobei der Ruß oxidiert ist oder Säure-Base-Wechselwirkungen zwischen den funktionellen Carbonsäuregruppen entlang der Elastomerkette und den aminhaltigen funktionellen Gruppen des oberflächenbehandelten Rußes aufweist, wobei der Ruß oxidiert und aminbehandelt, oder chloriert und mit Ammoniak behandelt ist.

8. Mischungszusammensetzung nach einem der Ansprüche 1 bis 7, wobei der oberflächenbehandelte Ruß mit einem Oxidationsmittel behandelt wurde, gefolgt von einer Behandlung mit einer Verbindung auf Aminbasis, wobei die Verbindung auf Aminbasis eine Diaminverbindung oder ein Aminverbindung mit Hydroxid ist.

9. Verfahren zum Erhalten einer Mischungszusammensetzung, die aus einem oberflächenbehandelten Ruß und einem funktionalisierten Elastomer mit einer Funktionalisierung entlang der Elastomerkette besteht, wobei das Elastomer ein Lösungs-SBR ist und wobei die Elastomerfunktionalisierung aus polaren Carbonsäuregruppen besteht, und wobei die Komponenten reaktiv gemischt werden, um die chemische Wechselwirkung zwischen einem oberflächenbehandelten Ruß und einem funktionalisierten Elastomer zu erleichtern, wobei der oberflächenbehandelte Ruß ein Ruß ist, der mit Peroxid oder Ozon behandelt wurde, was zu einer Oxidation der Oberfläche mit polaren sauerstoffhaltigen Funktionalitäten führt; oder wobei der oberflächenbehandelte Ruß mit einem Oxidationsmittel behandelt wurde, gefolgt von einer Behandlung mit einer Verbindung auf Aminbasis, was zu einer Aminfunktionalisierung führt; oder wobei der oberflächenbehandelte Ruß mit einem Oxidationsmittel behandelt wurde, gefolgt von einer Behandlung mit einer Verbindung auf Hydroxybasis; oder wobei der oberflächenbehandelte Ruß mit einem Chlorierungsmittel behandelt wurde, gefolgt von einer Behandlung mit Ammoniak, was zu einer Aminfunktionalisierung führt, wobei das reaktive Mischen in einem Kautschukmischer so durchgeführt wird, dass die Verbindung für einen bestimmten Zeitraum auf einer erhöhten Temperatur gehalten wird.

10. Verfahren nach Anspruch 9, wobei der oberflächenbehandelte Ruß mit einem Oxidationsmittel behandelt wurde, gefolgt von einer Behandlung mit einer Verbindung auf Aminbasis, wobei die Verbindung auf Aminbasis eine Diaminverbindung oder eine Aminverbindung mit Hydroxid ist.

11. Verwendung einer Mischungszusammensetzung nach einem der Ansprüche 1 bis 8 zur Herstellung eines Personen-, Lastkraftwagen- oder Rennreifens.

## Revendications

1. Composition de composé constituée d'un noir de carbone traité en surface et d'un élastomère fonctionnalisé avec fonctionnalisation le long de la chaîne élastomère, dans laquelle l'élastomère est une solution de SBR et dans laquelle la fonctionnalisation de l'élastomère se compose de groupes polaires, d'acide carboxylique, et dans laquelle le noir de carbone traité en surface est un noir de carbone qui a été traité avec un peroxyde ou de l'ozone, résultant en une oxydation de la surface avec des fonctionnalités polaires, contenant de l'oxygène ; ou dans laquelle le noir de carbone traité en surface a été traité avec un agent oxydant, avec ensuite un traitement avec un composé à base d'amine, résultant en une fonctionnalisation amine ; ou dans laquelle le noir de carbone traité en surface a été traité avec un agent oxydant, avec ensuite un traitement avec un composé hydroxylé ; ou dans laquelle le noir de carbone traité en surface a été traité avec un agent chlorant, avec ensuite un traitement avec de l'ammoniac, résultant en une fonctionnalisation amine.

2. Composition de composé selon la revendication 1, dans laquelle la solution de SBR est sélectionnée parmi des mélanges du SBR avec du BR, du NR et de l'EPDM, et le SBR.

3. Composition de composé selon la revendication 1, dans laquelle l'aire de surface du noir de carbone traité en surface est de 60 à 300 m²/g et la structure de surface du noir de carbone traité en surface est de 50 à 180 cc/100 g.

4. Composition de composé selon la revendication 3, dans laquelle le noir de carbone traité en surface a été produit par un procédé correspondant au noir de fourneau, au noir tunnel ou au noir de fumée.

5. Composition de composé selon la revendication 1, la composition présentant à la fois une hystérésis sensiblement plus basse et une traction sur voie humide améliorée par rapport aux composés entièrement à base de silice, et présentant une abrasion DIN et une usure de bande de roulement améliorées.

6. Composition de composé selon la revendication 1, dans laquelle l'élastomère est fonctionnalisé le long de la chaîne élastomère et présente des réductions d'hystérésis, mesurées par essai dynamique et la diminution du facteur de perte tangente delta à 60 à 75 °C, et présente une traction sur voie humide améliorée, mesurée par essai dynamique et l'augmentation du facteur de perte tangente delta à 0 à -10 °C.

7. Composition de composé selon la revendication 1, comprenant un composé de noir de carbone et d'élastomère comportant une liaison hydrogène polaire-polaire ou intermoléculaire entre les groupes fonctionnels acide carboxylique le long de la chaîne élastomère et les groupes fonctionnels contenant de l'oxygène sur le noir de carbone traité en surface, dans laquelle le noir de carbone est oxydé, ou comportant des interactions acide-base entre les groupes fonctionnels acide carboxylique le long de la chaîne élastomère et les groupes fonctionnels contenant une amine sur le noir de carbone traité en surface, dans laquelle le noir de carbone est oxydé et traité avec une amine, ou chloré et traité avec de l'ammoniac.

8. Composition de composé selon l'une des revendications 1 à 7, dans laquelle le noir de carbone traité en surface a été traité avec un agent oxydant, avec ensuite un traitement avec un composé à base d'amine, dans laquelle le composé à base d'amine est un composé diamine ou un composé amine avec un hydroxyde.

9. Procédé permettant d'obtenir une composition de composé constituée d'un noir de carbone traité en surface et d'un élastomère fonctionnalisé avec fonctionnalisation le long de la chaîne élastomère, dans lequel l'élastomère est une solution de SBR et dans lequel la fonctionnalisation de l'élastomère se compose de groupes polaires, d'acide carboxylique, et dans lequel les constituants sont mélangés de manière réactive pour faciliter une interaction chimique entre un noir de carbone traité en surface et un élastomère fonctionnalisé, dans lequel le noir de carbone traité en surface est un noir de carbone qui a été traité avec un peroxyde ou de l'ozone, résultant en une oxydation de la surface avec des fonctionnalités polaires, contenant de l'oxygène ; ou dans lequel le noir de carbone traité en surface a été traité avec un agent oxydant, avec ensuite un traitement avec un composé à base d'amine, résultant en une fonctionnalisation amine ; ou dans lequel le noir de carbone traité en surface a été traité avec un agent oxydant, avec ensuite un traitement avec un composé hydroxylé ; ou dans lequel le noir de carbone traité en surface a été traité avec un agent chlorant, avec ensuite un traitement avec de l'ammoniac, résultant en une fonctionnalisation amine, le mélange réactif étant réalisé dans un mélangeur à caoutchouc de telle sorte que le composé soit maintenu à une température élevée pendant une certaine période de temps.

10. Procédé selon la revendication 9, dans lequel le noir de carbone traité en surface a été traité avec un agent oxydant, avec ensuite un traitement avec un composé à base d'amine, dans lequel le composé à base d'amine est un composé diamine ou un composé amine avec un hydroxyde.

11. Utilisation d'une composition de composé selon l'une des revendications 1 à 8 pour la préparation d'un pneumatique de voiture particulière, de camion ou de course.
